# EUROPÄISCHE PATENTSCHRIFT

(11) **EP 4 259 410 B1**
(45) Veröffentlichungstag und Bekanntmachung des Hinweises auf die Patenterteilung: **02.04.2025**
(21) Anmeldenummer: 21835163.3
(22) Anmeldetag: 27.11.2021
(51) Int. Cl.: B29C 44/50, B29C 48/00, B29C 48/06, B29C 48/07, B29C 48/31, B29C 48/92, B29C 48/305, B29C 48/90

(54) **SCHAUMFORMEINRICHTUNG UND SCHAUMEXTRUSIONSVORRICHTUNG**
FOAM FORMING MEANS AND FOAM EXTRUSION APPARATUS
MOYEN DE FORMATION DE MOUSSE ET APPAREIL D'EXTRUSION DE MOUSSE

(30) Priorität: 10.12.2020 DE 102020215683
(43) Veröffentlichungstag der Anmeldung: 18.10.2023
(73) Patentinhaber: VAN LÜCK, Frank, 47877 Willich (DE)
(72) Erfinder: VAN LÜCK, Frank, 47877 Willich (DE)
(74) Vertreter: Abel, Martin
(86) Internationale Anmeldenummer: PCT/EP2021/083261
(87) Internationale Veröffentlichungsnummer: WO 2022/122428

(56) Entgegenhaltungen:
- WO-A1-2018/100207
- DE-A1- 102016 011 039
- GB-A- 1 307 849
- GB-A- 2 464 947
- US-A- 4 292 019
- US-A1- 2015 352 759

## Beschreibung

Zur Herstellung eines Schaum Körpers aus Kunststoff wird Kunststoffschmelze mit Treibmittel versetzt. Bei Austritt aus einer Düse schäumt die Schmelze auf, wodurch der Schaumkörper entsteht. Um den Aufschäumprozess zu führen und eine gewünschte Form zu erhalten, sind Vorrichtung bekannt, die mittels Flächen die aufschäumende Schmelze begrenzen und so den Schaumkörper formen. Etwa bei der Herstellung von Kunststoffbahnen wird dadurch der Querschnitt des Schaum Körpers definiert.

In der Druckschrift DE 10 2016 011 039 A1 wird eine Schaumextrusionsdüse vorgeschlagen, die zwei gegenüberliegende Führungsflächen aufweist. Die Führungsflächen sind beweglich, so dass der Winkel zwischen den Führungsflächen eingestellt werden kann. Dadurch wird die Dicke des Schaumkörpers definiert. US4292019 A, US2015/352759 A1 und WO2018/100207 A1 zeigen Schaumformeinrichtungen mit den Merkmalen des Oberbegriffs des Anspruchs 1.

Es wurde erkannt, dass durch eine Führung nur an zwei Flächen der Schaumkörper zwar in einer Richtung definiert werden kann, jedoch in einer hierzu quer verlaufenden Richtung, der Aufschäumprozess nicht ausreichend geführt werden kann. Dies führt zu inhomogener Porenbildung. Es ist daher eine Aufgabe der Erfindung, eine Möglichkeit aufzuzeigen, mit der sich ein Schaumkörper mit definierten Maßen sowie mit möglichst homogen verteilten Poren und möglichst homogenen Porengrößen mit erzeugen lässt.

Diese Aufgabe wird gelöst durch die Schaumformeinrichtung, nach dem unabhängigen Anspruch 1, und die Schaumextrusionsvorrichtung nach Anspruch 15. Weitere Eigenschaften, Merkmale, Ausführungsformen und Vorteile ergeben sich mit den abhängen Ansprüchen, der Beschreibung und den Figuren.

Es wird daher eine Schaumformeinrichtung vorgeschlagen, die sich an einen Extruder (bzw. an dessen Abgabedüse) anschließen kann, aus dem Kunststoffschmelze tritt, der die mit Treibmittel versetzt ist. Die Schaumformeinrichtung verfügt über einen Eintritt und einen Austritt. Die Schaumformeinrichtung hat eine Längsachse, die vom Eintritt zum Austritt führt. Die Schaumformeinrichtung weist mehrere Flächenpaare auf. Jedes Flächenpaar weist mindestens zwei gegenüberliegende Flächen auf. Die Flächen der Flächenpaare sind umfänglich aneinandergereiht. Die verschiedenen Flächenpaare begrenzen den Aufschäumungsraum an verschiedenen umfänglichen Stellen; es besteht daher eine Begrenzung nicht nur mittels eines Flächenpaars, sondern mittels mehrerer Flächenpaare, die an unterschiedlichen Stellen des Umfangs des Aufschäumungsraums angeordnet sind. Der Umfang liegt in einer Querschnittsfläche, d.h. in einer Fläche oder Ebene, die von der Längsachse bzw. der Förderrichtung durchstoßen wird, vorzugsweise in einem im wesentlichen senkrechten Winkel. Mit anderen Worten sind, auf den Querschnitt der Einrichtung bezogen, verschiedene Flächenpaare an verschiedenen Stellen vorgesehen. Auf die Längsachse der Einrichtung bezogen sind die Flächen eines ersten Flächenpaars an ersten Winkelabschnitten vorgesehen, und die Flächen mindestens eines zweiten Flächenpaars sind an zweiten Winkelabschnitten vorgesehen, die von den ersten Winkelabschnitten verschieden sind und insbesondere nicht oder nur an einem Randbereich die ersten Winkelabschnitte überlappen. Flächen der ersten und zweiten Flächenpaare sind umfänglich (etwa bezogen auf die Längsachse) aneinandergereiht; es wechseln sich umfänglich die Flächen des ersten und des zweiten Flächenpaars ab. Bei mehreren Flächenpaaren (mehr als zwei), die an den Eintritt angrenzen, sind die Flächen der mehreren Flächenpaare vorzugsweise aneinandergereiht. Die Normalen der ersten und der zweiten Flächenpaare sind zueinander winkelversetzt. Es ergibt sich durch die Flächenpaare eine im Wesentlichen umfängliche Begrenzung oder eine Begrenzung für mehrere Umfangsabschnitte des Aufschäumungsraums. Die ersten und die zweiten Flächenpaare sind insbesondere unterschiedlich zu der Längsachse orientiert.

Die aufschäumende Masse kann dadurch mit homogener Porenverteilung hergestellt werden, da mehrere Flächenpaare vorgesehen sind, die umfänglich an verschiedenen Stellen (des Querschnitts) vorgesehen sind. Der Schaumkörper wächst beim Aufschäumen daher nicht in eine Richtung begrenzt durch Flächen und in einer anderen (hierzu winkelversetzten) Richtung unbegrenzt, sondern hat in verschiedene Richtungen ähnliche Aufschäumgeschwindigkeit aufgrund der Flächen, die an verschiedenen umfänglichen Stellen den Querschnitts bzw. des Schaumkörpers den Aufschäumprozess begrenzen und führen. Es wird insbesondere vermieden, dass sich die aufschäumende Masse ungehemmt in eine Richtung (etwa seitlich) ausdehnen kann, während Flächen die Aufschäumung in anderer Richtung (etwa in vertikaler Richtung) begrenzen. Ferner lässt sich nicht nur die Dicke des entstehenden Schaumkörpers definieren, sondern es kann die gewünschte Querschnittsform definiert werden, etwa die Kantenlängen eines viereckigen Querschnitts.

Eine Verstellung der Düsenspaltdicke, wie es aus dem Stand der Technik bekannt ist, erlaubt zwar eine Dickeneinstellung. Da jedoch der Großteil des Aufschäumvorgangs nach dem Düsenspalt folgt, dieses Aufschäumen jedoch nicht mehr durch die Düsenspaltdicke kontrolliert werden kann, entstehen hohe Dickenschwankungen. Diese werden üblicherweise durch entsprechende Nachbearbeitungsschritte (Hobeln, Schneiden, etc.) entfernt, wobei dies jedoch zum einen die geschlossene Überfläche der Schaumbahn verletzt und zum anderen Verschnitt bedeutet. Im Gegensatz hierzu erlaubt die Erfindung die Form- und Flächenbearbeitung der Schaumbahn während der Entstehung (Aufschäumung) der Schaumbahn. Dadurch kann eine deutlich präzisere Dicken- und Formgebung erreicht werden, da eine deutlich längere Zeitspanne des Aufschäumens durch die Flächen kontrolliert werden kann. Eine Nachbearbeitung ist daher nur in deutlich geringerem Maße oder gar nicht erforderlich. Während beim Vorrichtung gemäß dem Stand der Technik nur einige wenige Schrauben zur Dickeneinstellung am Spalt verwendet werden können, ermöglicht die Erfindung eine Einstellung der Dicke der Schaumbahn an einer Stelle, an der dieser deutlich breiter und somit weiter aufgeschäumt ist, so dass deutlich mehr Einstellglieder über die gesamte Breite der Schaumbahn einwirken können. Das ermöglicht eine feinere Einstellung und auch eine Einstellung unter deutlich geringeren Druckbelastungen der Einstellglieder als am Spalt, an welchem die Schmelze noch unter vergleichsweise hohem Druck steht.

Ein weiterer Vorteil besteht darin, dass durch die mit der Erfindung ermöglichte Oberflächenbehandlung besonders ebene Flächen erzeugt werden können, welche wiederum mit einer ungeschäumten Kunststoffschicht laminiert werden können. Die laminierte Bahn kann dann durch die hier beschriebene Vorrichtung geglättet werden. Zahlreiche Kunststoffe, etwa Polystyrol, lassen sich nicht stark dehnen, so dass sie sich entweder nur mit Druck und/oder hoher Temperatur applizieren lassen (wobei dies das Aufbringen auf eine noch warme Schaumbahn ausschließt oder den Schaumkörper nachteilig verformt). Bei einer Dickenkorrektur nur an der Spaltdüse, d.h. am Eintritt, wäre die Oberfläche zu uneben. Die Erfindung ermöglicht jedoch eine glatte, noch warme Schaumbahn, auf die auch schlecht verstreckbarer Kunststoff (als Laminatmaterial) wie beispielsweise Polystyrol aufgebracht werden kann.

Ferner besteht durch die erfindungsgemäße Formung der aufschäumenden Schmelze nach der Düse, d.h. an Stellen, an denen der Schaum bereits größtenteils aufgeschäumt ist, weniger Druck, der von dem Schaum auf die formenden Elemente (hier: Flächen) ausgeübt wird. Dadurch kann präziser und mit geringerem Aufwand die Schaumform durch die Flächen definiert werden. Insbesondere ergibt sich auch bei dünnen Blechen oder Platten, die die Flächen vorsehen, keine wesentliche Durchbiegung aufgrund des geringeren Drucks.

Die Positionierung (d.h. Neigung und/oder Abstand) zumindest einer der Flächen ist relativ zur Längsachse der Schaumformeinrichtung beziehungsweise relativ zur Förderrichtung des Schaumkörpers einstellbar, wodurch sich der Aufschäumungsprozess steuern lässt. Insbesondere kann dadurch bei Temperatur- oder Viskositätsveränderungen der Kunststoffschmelze auf unterschiedliche Eigenschaften kompensierend eingewirkt werden. Die mindestens eine einstellbare Fläche lässt sich im Rahmen einer Steuerung oder Regelung einstellen. Die einstellbare Fläche ist vorzugsweise über ein Steuersignal einstellbar, etwa über ein elektrisches, pneumatisches oder hydraulisches Steuersignal. Somit sind nicht alle Flächen der Flächenpaare starr zueinander angeordnet, sondern es kann eine Anpassung an Prozessparameter wie Temperatur, Fördergeschwindigkeit oder ähnliches vorgenommen werden, um so einen homogenen Aufschäumungsprozess bei veränderlichen Prozessparametern zu ermöglichen. Der Ausgleich zu Schwankungen mindestens eines Prozessparameters wird zumindest teilweise durch Verstellen der mindestens einen einstellbaren Fläche durchgeführt. Vorzugsweise sind beide Flächen mindestens eines Flächenpaares oder aller Flächenpaare einstellbar. Einstellbar sind: der Abstand von Flächen eines Flächenpaares und/oder die Neigung der Flächen der Flächenpaare zu der Längsachse und/oder zu einem benachbarten Flächenpaar. Vorzugsweise werden die Flächen eines Flächenpaars symmetrisch zueinander verstellt. Die Einrichtung ist hierzu ausgestaltet. Die Positionierung zumindest einer Fläche der Flächenpaare relativ zu der Längsachse ist einstellbar. Die Positionierung umfasst vorzugsweise die Neigung der betreffenden Fläche zur Längsachse und/oder den Abstand zur Längsachse. Mit anderen Worten ist die Positionierung zumindest einer Fläche der Flächenpaare relativ zu der anderen Fläche des Flächenpaars einstellbar. Die Positionierung umfasst dann vorzugsweise die Neigung der betreffenden Fläche zur anderen Fläche des Flächenpaares und/oder den Abstand zur anderen Fläche des Flächenpaares (etwa bezogen auf den Flächenmittelpunkt der jeweiligen Fläche).

Der Eintritt ist vorzugsweise als Eintrittsfläche vorgesehen, und der Austritt als eine Austrittsfläche. Der Eintritt und der Austritt sind offene Flächen, durch die hindurch Schmelze ungehindert treten kann. Die Austrittsfläche ist größer als die Eintrittsfläche und lässt sich insbesondere einstellen (durch einstellen der einstellbaren Flächen oder Flächen). Die Eintrittsfläche ist dafür vorgesehen, an ein Ende eines Extruders angeschlossen zu werden, insbesondere an eine Abgabedüse eines Extruders. An den Austritt können sich weitere Verarbeitungsvorrichtungen anschließen, die zum Verarbeiten, d.h. Formen und/oder Schneiden des Schaumkörpers eingerichtet sind. Am Austritt ist der Abstand zwischen zwei gegenüberliegenden Flächen (insbesondere seitlichen Flächen) vorzugsweise größer als am Eintritt, und kann beispielsweise mindestens 150%, 180%, 220% oder 250% des Abstands am Eintritt betragen. Dies kann nur für eine Orientierung gelten, etwa ein horizontaler Abstand, während in einer vertikalen Orientierung (d.h. einer hierzu senkrechten Orientierung) der Abstand zwischen gegenüberliegenden Flächen am Eintritt einem Spalt von nur wenigen Millimetern (oder 0,5 - 2 mm) entsprechen kann und am Austritt ein oder mehrere Zentimeter (beispielsweise mindestens 10 mm, mindestens 20 mm oder mindestens 50 mm) beträgt. Die Maße sind an verschiedene Anwendungen anzupassen, die deutlich unterschiedliche Bemaßungen vorsehen können. Die Querschnittsfläche, die durch die Flächen definiert wird, d.h. der Querschnitt des Aufschäumraums nimmt ausgehend vom Eintritt zu. Insbesondere ist die Querschnittsfläche des Kanals, der durch die Flächen definiert wird, vorzugsweise ein Vielfaches der Querschnittsfläche der Düse. Die maximale Querschnittsfläche definiert etwa durch eine Gruppe der Flächenpaare, die am Eintritt vorgesehen ist, oder eine Querschnittsfläche definiert durch die Flächen, die dem Austritt am nächsten liegen, kann mindestens das Doppelte, Vierfache oder Zehnfache der Querschnittsfläche der Düse oder des Eintritts betragen. Die maximale Querschnittsfläche definiert durch die Flächen, die dem Austritt am nächsten liegen, kann mindestens das Vierfache, Zehnfache oder Zwanzigfache der Querschnittsfläche der Düse oder des Eintritts betragen. Dadurch ist an diesen Flächen der Druck in der Schmelze deutlich geringer als am Eintritt bzw. an der Düse, wodurch sich die Flächen präziser und mit weniger Spannung einstellen lassen.

Insbesondere kann die Längsachse durch die Mitte der Fläche des Eintritts, d.h. der ja Eintrittsfläche führen und insbesondere auch durch die Mitte der Austrittsfläche führen. Es sind auch andere Referenzpunkte des Eintritts und des Austritts möglich, um den Verlauf der Längsachse zu definieren. Es können Befestigungselemente vorgesehen sein, um am Eintritt der Schaumformeinrichtung die Schaumformeinrichtung mit einem Extruder zu verbinden.

Der Eintritt kann einen starren Eingang aufweisen. Der Eintritt kann gebildet sein von einem Hohlkörper, beispielsweise in Form eines (kurzen) Rohrs (vorzugsweise innen rechteckig oder polygonal ausgebildet, insbesondere in der Querschnittsform der Flächenpaare, die sich an den Eingang anschließen). Der Eintritt umfasst vollumfänglich verlaufende Wände. Diese sind vorzugsweise starr. Der Eingang kann ferner die genannten Befestigungselemente oder Teile hiervon aufweisen, um eine Befestigung an einen vorgeschalteten Extruder zu ermöglichen. Der Querschnitt des Eingangs entspricht vorzugsweise dem Querschnitt der Flächenpaare an der Stelle, an der die Flächenpaare an den Eingang anstoßen. Der Querschnitt des Eingangs ist vorzugsweise konstant entlang das Längsverlaufs (d.h. entlang der Längsachse) des Eingangs, kann sich jedoch auch zu den Flächenpaaren hin, das heißt von dem Eintritt aus in Richtung des Austritts), erweitern. Auch der Abstand der Flächen der Flächenpaare kann sich in dieser Richtung erweitern. Der Eingang kann eingebildet sein von einem Hohlkörper mit der gleichen Querschnittsform wie der Querschnitt der Flächenpaare an der Stelle, an den Flächenpaare an den Eingang anstoßen. Der Querschnitt des Eingangs ist vorzugsweise viereckig, kann jedoch auch die Form, insbesondere in Form eines Trapezes, eines Parallelogramms oder Rechtecks. Insbesondere ist der Eingang mit einem Querschnitt ausgebildet, der rechteckig ist, wobei die Seitenwände die Höhe der Seitenwände ein Bruchteil der Horizontalwände entspricht. Der Bruchteil beträgt beispielsweise nicht mehr als 30%, 10%, 5% oder 3%. Dadurch können Schaumbahnen mit gewünschter Breite und Dicke erzeugt werden. Dies kann auch für eine oder mehrere Gruppen von Flächenpaaren gelten, deren Umfang derart geometrisch ausgestaltet ist; die Form des Querschnitts der Flächenpaare (insbesondere der sich an den Eingang anschließenden Flächenpaare) kann der Querschnittsform des Eingangs bzw. der genannte Wände entsprechen.

Wie erwähnt weist die Schaumformeinrichtung eine Vielzahl von Flächenpaaren auf. Jedes Flächenpaar hat jeweils zwei gegenüberliegende Flächen. Die Flächen sind vorzugsweise eben, wobei jedoch auch gebogene Flächen in Betracht kommen. Die Flächen der Flächenpaare können in einer Richtung, die von der Längsachse weg führt, gebogen sein.

Bezogen auf eine Mittenebene, die durch die Mitten des Eintritts und des Austritts verläuft und insbesondere vertikal orientiert ist, sind die Flächen jedes Flächenpaars symmetrisch zueinander angeordnet. Bezogen auf die Längsachse der Schaumformeinrichtung sind die Flächen jedes Flächenpaars auf derselben Höhe der Längsachse (der Schaumformeinrichtung) angeordnet. Für jedes Flächenpaar gilt, dass die Flächen des Flächenpaars gleich groß sind. Die Flächenpaare beziehungsweise deren Flächen sind geeignet, die Schmelze zu führen. Die Flächen der Flächenpaare sind aus einem festen Material ausgebildet. Die Flächen der Flächenpaare werden beispielsweise gebildet von einem starren, flächigen Körper. Die Flächen der Flächenpaare werden gebildet von Oberflächen von Blechstücken oder Kunststoffplatten. Die Innenseite der Flächenpaare kann mit einer Antihaftbeschichtung ausgestattet sein. Die Flächen eines, aller oder einer Untergruppe der Flächenpaare sind zueinander parallel. Jedoch kann ein Flächenpaar vorgesehen sein, dessen Flächen zueinander geneigt sind. So kann umfänglich von zwei Flächenpaaren ein Rechteck oder Parallelogramm gebildet werden, wenn das erste und das zweite Flächenpaar jeweils zwei zueinander parallele Flächen aufweist, oder ein Trapez, wenn die Flächen des ersten Flächenpaares zueinander parallel sind und die Flächen des zweiten Flächenpaares zueinander geneigt sind. Es können jedoch auch komplexere Querschnittsformen in Form von Polygonen mit mehr als vier Seiten gebildet werden und/oder Querschnittsformen mit nicht geraden Linien, etwa bei Flächenpaare mit gebogenen Flächen.

Die Flächenpaare beziehungsweise deren Flächen begrenzen körperlich einen Aufschäumungsraum, insbesondere zumindest teilweise in Umfangsrichtung bezogen auf die Längsachse. Der Aufschäumungsraum ist ferner begrenzt von dem Eintritt und dem Austritt, wobei diese offene Flächen sind, durch die Schmelze bzw. ein Schaumkörper treten kann. Die Begrenzung durch den Eintritt und den Austritt sind gedachte Begrenzungen zur Definition des Aufschäumungsraums und keine körperlichen Begrenzungen, wie sie durch die Flächenpaare bestehen. Die offenen Flächen sind geeignet, die aufschäumende Schmelze seitlich (als teilweise umfängliche oder vollständig umfängliche Wand) zu führen, um so den Querschnitt eine Schaumkörpers zu definieren. Die Flächenpaare und deren Flächen bzw. die Körper, welche die Flächenpaare ausbilden, werden somit von außen gehalten, um dem Druck der aufschäumenden Schmelze einen Gegendruck entgegenzusetzen, so die Form des Schaumkörpers zu definieren. Da zumindest eine Fläche der Flächenpaare oder alle Flächen einiger oder aller Flächenpaare einstellbar sind, kann dadurch der Aufschäumungsprozess geführt werden, insbesondere zur homogenisierten Schäumung (d.h. möglichst gleichartige Schäumung in unterschiedlichen radialen Richtungen, ausgehend von der Längsachse).

In einem Beispiel umfasst die Schaumformeinrichtung eine erstes und ein zweites Flächenpaar. Jedes Flächenpaar hat zwei gegenüberliegende Flächen. Die Flächen der verschiedenen Flächenpaare wechseln sich umfänglich ab. Die Flächen sind eben und bilden ein Rechteck. Das erste und zweite Flächenpaar bilden eine erste Gruppe, die auf den Eintritt folgt. Es bestehen vorzugsweise weitere Gruppen von ersten und zweiten Flächenpaaren, die gleichartig aufgebaut sind, jedoch eine andere Neigung und/oder einen anderen Abstand zwischen den Flächen aufweisen. Die weiteren Gruppen sind in Richtung der Längsachse aneinandergereiht; die Gruppen sind somit (senkrecht zur Umfangsrichtung) vom Eintritt zum Austritt hin aneinandergereiht.

Es kann zwischen zwei Gruppen in Richtung Austritt eine Lücke gelassen werden, etwa um dort eine Oberflächenbehandlungsvorrichtung anzuordnen. Eine Gruppe kann Flächen aufweisen, die umfänglich eine Lücke lassen, um an dieser Lücke eine Oberflächenbehandlungsvorrichtung vorzusehen. Auf diese Gruppe folgt vorzugsweise mindestens eine Gruppe ohne Lücke, d.h. mit vollständig umlaufenden Flächen. Ferner kann in einer Fläche (oder in den Flächen eines Flächenpaars) eine Öffnung vorgesehen sein. Diese Öffnung kann als Schlitz, Kreisloch, Langloch oder ähnliches vorgesehen sein. Vorzugsweise erstreckt sich bei einer länglichen Öffnung die Haupterstreckungsrichtung der Öffnung entlang der Breite der Fläche (d.h. quer zur Richtung, die vom Eintritt zum Austritt weist). An der Öffnung kann eine Oberflächenbehandlungsvorrichtung vorgesehen sein. Diese Oberflächenbehandlungsvorrichtung kann etwa eine Laminierstation sein, die insbesondere eingerichtet ist zum Aufbringen eines Kunststoffs, etwa einer Kunststoffbahn, insbesondere aus ungeschäumten Kunststoff. Es kann das gleiche Kunststoffmaterial zur Laminierung durch die Laminierstation verwendet werden, aus dem auch die Schaumbahn ist. Eine derartige Laminierstation kann eingerichtet sein, die Kunststoffbahn zu erwärmen, so dass an der Öffnung ein erwärmter Kunststoff auf den noch nicht erkalteten, d.h. warmen Schaumkörper (d.h. die sich aus der Schmelze ergebende Schaumbahn) aufgebracht wird. Die hier beschriebene Vorrichtung kann die Oberflächenbehandlungsvorrichtung mit umfassen. Als Oberflächenbehandlungsvorrichtung kann ferner eine Färbe- oder Druckvorrichtung vorgesehen sein, die in der genannten Lücke auf den Schaumkörper bzw. die geschäumte Schmelze wirkt. Die Lücke bzw. die Öffnung ist vorzugsweise dort vorgesehen, wo der Schaumkörper aufgrund seiner Temperatur noch plastisch verformbar ist, d.h. in einer Höhe, in der der Schaumkörper (insbesondere an der Oberfläche) noch nicht vollständig erstarrt ist.

Allgemein reihen sich mehrere Flächenpaare der Vielzahl von Flächenpaaren in einer Richtung vom Eintritt zum Austritt hin aneinander. Die sich entlang des gleichen Umfangs oder in der gleichen Höhe der Längsachse aneinanderreihenden Flächen bzw. Flächenpaare gehören zur gleichen Gruppe. Es können mehrere Gruppen bestehen, d.h. mehrere hintereinander angeordnete Ringe, die von den Flächen bzw. Flächenpaare gebildet werden. Dadurch lässt sich ein einstellbarer Aufschäumungsraum bilden, der sich vom Eintritt zum Austritt hin vergrößert, vorzugsweise in Höhenrichtung und in Breitenrichtung. Durch die Einstellbarkeit der Flächen kann auch der Aufschäumungsraum an aktuelle Prozessparameter eingestellt werden wie gewünschte Breite oder Dicke des Schaums, Viskosität, Förderrate, Dampfdruck des Treibmittels und ähnliches, insbesondere um eine gleichmäßige Aufschäumung (geringe Schaumdichte, gleichmäßige Zellenform und /oder -größe) zu ermöglichen. Eine Eigenschaft der Schaumformeinrichtung ist es daher, dass der Aufschäumungsraum (in seiner Ausdehnung) bzw. dessen Begrenzung einstellbar ist.

Ein Aspekt der Schaumformeinrichtung ist es, dass (umfänglich aneinandergereihte) Flächenpaare vorgesehen sind, insbesondere zumindest das erste und zweite Flächenpaar, die den Aufschäumungsraum im Wesentlichen vollständig umfänglich begrenzen. Hierzu können nebeneinanderliegende (oder hintereinander liegende) Flächen der Flächenpaare direkt aneinander angrenzen oder können sich vorzugsweise an einem Rand überlappen. Dies betrifft insbesondere Flächenpaare, die in der gleichen Höhe bezogen auf die Längsachse angeordnet sind. Dies sind Flächenpaare der gleichen Gruppe. Es können mehrere Gruppen mit jeweils mehreren Flächenpaaren vorgesehen sein, die entlang der Längsachse aneinandergereiht sind. Flächenpaare von aufeinander folgenden Gruppen können ebenso aneinander angrenzen oder sich an einem Rand überlappen. Die Flächenpaare können (in Längsachsenrichtung) eine im Wesentlichen durchgehende Hülle für den Aufschäumungsraum bilden, insbesondere wenn mehrere Gruppen aneinandergereiht sind. Die im Wesentlichen durchgehende Hülle kann vom Eintritt bis zum Austritt reichen.

Anstatt einer direkten Aneinanderreihung benachbarter Flächen (angrenzend oder mit überlappendem Rand) kann auch eine Aneinanderreihung der Flächen mit Lücken in Betracht gezogen werden. Dies ermöglicht eine vereinfachte Einstellung der Flächen. Die Lücken werden vorzugsweise von Spalten zwischen benachbarten Flächen vorgesehen, die nicht breiter als 10 mm oder 5 mm bzw. vorzugsweise nicht breiter als 2 mm oder 1 mm sind. In Sonderfällen kann die maximale Breite der Spalte 15 mm, 20 mm oder 30 mm oder auch 50 mm oder 100 mm betragen, abhängig von der Stärke der Aufschäumung. Vorzugsweise ist der Spalt derart schmal, dass beim Aufschäumen kein Schaum durch den Spalt tritt. Da dies stark vom Schäumungsmaterial, dem Treibmittel und den Prozessparametern abhängt, sind daher nicht nur die genannten maximalen Spaltmaße denkbar. Auch mit Spalt bilden die Flächen eine vollständige Begrenzung für den Schaum, wenn kein Schaum durch die Spalte tritt. Die hier erwähnt Aneinanderreihung benachbarter Flächen oder Flächenpaare mit Lücke kann sich auf eine umfängliche Aneinanderreichung, auf eine Aneinanderreihung in einer Richtung von Eintritt zum Austritt oder beides beziehen.

Bevorzugt haben die Flächenpaare einen Querschnitt, der gemäß einem Viereck angeordnet ist. Die vier Seiten des Vierecks werden von zwei Flächenpaaren gebildet, insbesondere von deren zwei mal zwei Flächen. Die zwei Flächenpaare sind hierbei das erste und das zweite Flächenpaar. Diese Flächenpaare sind in der gleichen Höhe bezogen auf die Längsachse vorgesehen. Die Flächenpaare, insbesondere das erste Flächenpaar und das zweite Flächenpaar, begrenzen zusammen umfänglich den Aufschäumungsraum. Die Flächenpaare können als Viereck ein Viereck bilden, das zwei zueinander parallele Seiten hat, das dessen Seiten sich in zwei Paare zueinander jeweils paralleler Seiten aufteilen lässt oder dessen Seiten senkrecht zueinander angeordnet sind. Die ersten Flächenpaare können somit beispielsweise senkrecht zu den zweiten Flächenpaaren sein. Alternativ können die ersten Flächenpaare quer (und nicht senkrecht) zu den zweiten Flächenpaaren stehen. Die zwei Flächenpaare können so (umfänglich bzw. bezogen auf den Querschnitt), ein Trapez, ein Parallelogramm oder ein Rechteck bilden. Etwa zur Herstellung oder Formung von Schaumbahnen bestehen Ausführungsformen, bei denen die Flächenpaare im Querschnitt ein Rechteck bilden. Das seitliche Flächenpaar, etwa das erste Flächenpaar, kann eine Höhe aufweisen, die nur einem Bruchteil der Länge der Horizontalflächen (d.h. des horizontal verlaufenden Flächenpaars) entspricht. Der Bruchteil beträgt beispielsweise nicht mehr als 30%, 10%, 5% oder 3%, wodurch sich eine flache Bahn für zahlreiche Anwendungen ergeben kann. Die Flächen des ersten Flächenpaares können als linke Fläche und rechte Fläche bezeichnet werden, wobei sich dies auf den Querschnitt bezieht. Die Flächen des zweiten Flächenpaares können als obere Fläche und untere Fläche bezeichnet werden, wobei sich dies ebenso auf den Querschnitt bezieht. Die Flächen der Flächenpaare können symmetrisch zueinander angeordnet sein, wobei vorzugsweise eine oder vorzugsweise zwei Symmetrieebenen bestehen, durch die vorzugsweise die Längsachse verläuft. Es können grundsätzlich mehrere, entlang der Längsachse aneinandergereihte Gruppen mit jeweils zwei derartigen Flächenpaaren vorgesehen sein. Es können sich mehrere Flächenpaare der Vielzahl von Flächenpaaren in einer Richtung vom Eintritt zum Austritt hin aneinanderreihen. Hierbei gehören Flächenpaare, die sich in einer Richtung vom Eintritt zum Austritt hin aneinanderreihen, zu unterschiedlichen Gruppen. Insbesondere können sich mehrere Gruppen in einer vom Eintritt zum Austritt führenden Richtung aneinanderreihen. Die Gruppen reihen sich somit in Förderrichtung und insbesondere entlang der Längsachse aneinander. Jede Gruppe verfügt vorzugsweise über mehrere Flächenpaare, die umfänglich aneinandergereiht sind und bevorzugt eine im Wesentlichen in sich geschlossene Umfangslinie (d.h. einen Ring) bilden. Die Flächen der Flächenpaare, welche sich in der Richtung vom Eintritt zum Austritt hin aneinanderreihen, sind vorzugsweise im Wesentlichen lückenlos oder teilweise überlappend aneinandergereiht. Die sich vom Eintritt zum Austritt aneinanderreihenden Flächen bzw. Flächenpaare bilden zusammen eine durchgehende Innenfläche der Vorrichtung zur Führung des Schaums.

Ferner kann neben dem ersten Flächenpaar ein weiteres Flächenpaar bestehen, dass sich an das erste Flächenpaar anschließt (oder mit diesem teilweise überlappt), und die gleiche Orientierung wie das erste Flächenpaar aufweist. Dadurch werden zwei gegenüberliegende Seiten des Querschnitts von mehreren Flächenpaaren gebildet. Alternativ oder zusätzlich kann neben dem zweiten Flächenpaar ein weiteres Flächenpaar bestehen, dass sich an das zweite Flächenpaar anschließt (oder mit diesem teilweise überlappt), und die gleiche Orientierung wie das zweite Flächenpaar aufweist. Auch hierdurch können zwei (weitere) gegenüberliegende Seiten des Querschnitts von mehreren Flächenpaaren gebildet werden. Gemäß einer vergleichbaren Definition sind die Flächen eines, mehrerer oder aller Flächenpaare gestückelt und werden als Aneinanderreihung von einzelnen (körperlich eigenständigen) Flächenstücken (Platten oder Blechstücke) gebildet. Flächen bzw. Platten mit der gleichen Orientierung werden vorzugsweise teilweise überlappend angeordnet, können jedoch auch mit Lücke zueinander angeordnet werden, insbesondere mit einer Lücke wie sie hierin in Bezug auf unterschiedliche Gruppen oder (zueinander quer angeordneten) Flächenpaare dargestellt ist.

Ein weiterer Aspekt ist es, dass sich der Abstand zwischen gegenüberliegenden Flächen einer Untergruppe oder aller Flächenpaare sich zum Austritt der Schaumformeinrichtung hin vergrößert. Diese Vergrößerung kann zum Austritt der Schaumformeinrichtung linear sein, d.h. eine konstante Vergrößerungsrate aufweisen. Vorzugsweise ist jedoch die prozentuale oder absolute Vergrößerungsrate zum Ausgang hin am Eingang größer als zum Ausgang hin. Eine Ausführungsform sieht vor, dass in den ersten 10%, 20% oder 30% sich der Abstand zwischen gegenüberliegenden Flächen oder die Querschnittsfläche sich auf mindestens 40%, 60% oder 90% des am Austritt bestehenden Abstands bzw. der am Austritt bestehenden Querschnittsfläche erweitert. Dies trägt der am Eintritt bestehenden Aufschäumungstendenz bzw. dem Treibmitteldruck Rechnung, die größer ist, als am Ausgang. Die Querschnittsfläche ist hierbei die Querschnittsfläche des Kanals, der von den Flächenpaaren umgrenzt wird.

Weitere Ausführungsformen sehen vor, dass die Position der einstellbaren Flächen relativ zu der Längsachse und/oder ein Druck, der von den einstellbaren Flächen in Richtung des Aufschäumungsraums ausgeübt wird, einstellbar ist. Hierbei ist insbesondere die Lagerung der Flächen und der Flächenpaare entsprechend ausgebildet, wobei die Lagerung insbesondere elastische sein kann oder mit einer einstellbaren Elastizität ausgebildet sein kann. Die einstellbare Lagerung kann alle Flächen oder Flächenpaare, ein Teil dieser, oder nur eine Fläche oder ein Flächenpaar betreffen. Der Schaumkanal kann dadurch einstellbar verengt (oder wieder erweitert) werden. Die Lagerung kann an unterschiedlichen (Längs-) Abschnitten unterschiedlich eingestellt werden. Alternativ können die Flächen bzw. Flächenpaare nicht elastisch, sondern rigide gelagert sein. Hierbei können die hier genannten Aktuatoren verwendet werden oder auch Schrauben / Schraubengänge (mit zugehörigen Muttern), mittels denen die Lagerung der Flächen bzw. Flächenpaare vorgesehen wird.

Die Vorrichtung kann Aktoren aufweisen, die die einstellbaren Flächenpaare lagern. Die Aktoren sind eingerichtet, die Neigung und/oder die Position der einstellbaren Flächenpaare einzustellen. Die Aktoren können Teil der Lagerung sein oder diese vorsehen. Die Lagerung bzw. die Aktoren können mittels eines Signals eingestellt werden (Drucksignal, elektrisches Signal, pneumatische oder hydraulische Einstellung). Die Aktoren sind eingerichtet, während dem Betrieb (und nicht bzw. nicht nur bei der Wartung) eingestellt zu werden.

Die Aktoren lagern die Flächenpaare vorzugsweise elastisch gegenüber einem Gegenlager, können jedoch auch nicht elastisch gelagert sein. Die Aktoren sind vorzugsweise elastisch, etwa mittels eines elastischen Werkstoffs wie Gummi oder sind derart angesteuert, dass sich ein elastisches Verhalten ergibt.

Die Aktoren können pneumatische Aktoren sein, insbesondere Balgaktuatoren. Hierbei besteht ein pneumatischer Zugang zu jedem Aktor, so dass durch den Innendruck des Aktors die Position der daran befestigten Fläche und/oder die Elastizität der durch den Aktor vorgesehenen Lagerung eingestellt werden kann. Ferner können die Aktoren hydraulische Aktoren sein, wobei hierbei ebenso durch den einstellbaren Innendruck eine entsprechende Einstellbarkeit von Druck und/oder Position resultiert. Zudem können die Aktoren elektromechanische Aktoren sein, etwa ausgebildet als Linearmotor, als Hubmagnet, als elektrischer Stellantrieb, oder ähnliches. Zudem können hybride Aktoren vorgesehen sein, die mehrere dieser Einstellmechanismen kombinieren, etwa ein elektrischer Stellantrieb (oder anderer elektromechanische Aktor) kombiniert mit einer elastischen Aktoreinheit. Zudem kann die Verbindung zwischen Aktor und Gegenlager oder zwischen Aktor und Fläche / Flächenpaar elastisch sein bzw. ein elastisches Element (einstellbar oder nicht einstellbar) aufweisen. Ferner können zur Einstellung Schrauben / Schraubengänge vorgesehen sein, die insbesondere eine nicht elastische Lagerung vorsehen.

Die Schaumformeinrichtung kann ferner eine (pneumatische, hydraulische, elektrische, ...) Steuerung aufweisen, die ansteuernd mit den Aktoren verbunden ist. Es können mehrere aneinandergrenzende Flächenpaare vorgesehen sein, wobei die Steuerung eingerichtet ist, diese lückenlos aneinandergereiht einzustellen. Insbesondere können mehrere Flächenpaare der Vielzahl von Flächenpaaren in einer Richtung vom Eintritt zum Austritt hin aneinandergereiht sein, wobei die Steuerung eingerichtet ist, Flächen der Flächenpaare lückenlos aneinandergereiht einzustellen.

Ein Aspekt der Anordnung der Flächenpaare ist es, dass sich das erste Flächenpaar zwischen dem zweiten Flächenpaare befinden kann. Das erste Flächenpaar ist vorzugsweise zu dem zweiten gewinkelt angeordnet, etwa im Wesentlichen im rechten Winkel. Das erste Flächenpaar kann hierbei im Querschnitt die längere Kante bilden, während das zweite Flächenpaar die kürzere Kante bilden kann, insbesondere bei einem viereckigen oder insbesondere rechteckigen Querschnitt. Das erste Flächenpaar ist vorzugsweise dasjenige, welches (durch den Abstand der zugehörigen Flächen) die Dicke der Schaumbahn bestimmt; das zweite Flächenpaar kann dasjenige sein, welches (durch den Abstand der zugehörigen Flächen) die Breite der Schaumbahn bestimmt. Das erste Flächenpaar kann sich in horizontaler Richtung erstrecken und das zweite Flächenpaar in vertikaler Richtung. Mit anderen Worten kann das breitere Flächenpaar (d.h. das erste Flächenpaar) sich zwischen dem im Vergleich hierzu schmaleren Flächenpaar (d.h. das erste Flächenpaar) angeordnet sein. Das zweite, gegenüber dem ersten schmalere Flächenpaar stellt eine seitliche Begrenzung (in einer zweiten Richtung) für das erste Flächenpaar bzw. für den Aufschäumungsraum dar. Das erste, gegenüber dem zweiten breitere Flächenpaar begrenzt den Aufschäumungsraum (in einer zweiten Richtung), nicht aber das erste Flächenpaar. Die erste Richtung kann die horizontale Richtung sein, die zweite Richtung die vertikale Richtung. Der Querschnitt des Aufschäumungsraums ist vorzugsweise in horizontaler Richtung weiter als in vertikaler Richtung, wodurch eine liegende, d.h. sich horizontal verlaufende Schaumbahn ergibt. Dies kann sich nur auf einen ersten Abschnitt (vom Eintritt zum Austritt hin gesehen) beziehen, wobei ein zweiter, insbesondere darauf zum Austritt hin folgender, Abschnitt bestehen kann, bei dem nicht das erste (quer erstreckende) Flächenpaar zwischen dem zweiten (seitlichen) Flächenpaar angeordnet ist, sondern umgekehrt das zweite (seitliche) Flächenpaar zwischen dem ersten (quer erstreckenden) Flächenpaar.

Ein weiterer Aspekt ist die Verwendung von mehreren Flächenpaaren, die vom Eintritt zum Austritt hin ("Förderrichtung") aneinander gereiht sind, insbesondere aneinanderstoßend, lückenlos (d.h. mit einer Lücke von weniger als 10 mm, 5 mm, 2 mm oder 1 mm), oder teilweise überlappend. Es sind somit Flächen der Flächenpaare in einer Förderrichtung der Bahn aneinandergereiht, wodurch sich die Aufschäumung entlang der Förderrichtung an mehreren Stellen (entlang der Förderrichtung) individuell beeinflussen lässt. In der Draufsicht ergibt sich eine Reihung der Flächenpaare; die vom Eintritt zum Austritt aufeinanderfolgenden Flächenpaare können als aufeinanderfolgende Gruppen von Flächenpaaren bezeichnet werden. Es können somit mehrere erste sowie mehrere zweite Flächenpaare bestehen, die in der Richtung vom Eintritt zum Austritt hin in mehreren Gruppen aneinandergereiht sind. Die ersten Flächenpaare sind vorzugsweise entlang des Umfangs des Aufschäumraums zueinander versetzt zu den zweiten Flächenpaaren. Ein Beispiel wären erste Flächenpaare, die, bezogen auf den Umfang, senkrecht zu den zweiten Flächenpaaren stehen, wobei die ersten Flächenpaare bezogen auf den Querschnitt längs verlaufen während die zweiten Flächenpaare seitlich verlaufen.

Ein weiterer Aspekt ist es, dass in einem ersten Abschnitt ausgehend vom Eintritt mindestens eine erste Gruppe vorgesehen ist, bei der sich das erste Flächenpaar zwischen dem zweiten Flächenpaar befindet, wobei ferner mindestens eine zweite Gruppe vorgesehen ist, bei der sich das zweite Flächenpaar zwischen dem ersten Flächenpaar befindet. Vorzugsweise folgt die zweite Gruppe in der Richtung zum Austritt hin auf die erste Gruppe. Dadurch kann direkt nach dem Eintritt das Aufschäumen in der Höhe durch das (mindestens eine) Flächenpaar der ersten Gruppe unabhängig vom (mindestens einen) zweiten Flächenpaar gesteuert werden (da es sich dort nicht zwischen dem ersten Flächenpaar befindet). Um darauf folgend die seitlichen Ränder der Schaumbahn zu formen, ist in der zweiten Gruppe das (mindestens eine) zweite Flächenpaar zwischen dem (mindestens einen) ersten Flächenpaaren, d.h. es befindet sich zwischen dem zweiten Flächenpaar kein erstes Flächenpaar, so dass das zweite Flächenpaar frei gesteuert werden kann. In der ersten Gruppe behindert das mindestens eine zweite Flächenpaar nicht die Abstandseinstellung des ersten Flächenpaars und in der zweiten Gruppe wird die Abstandseinstellung des zweiten Flächenpaars nicht von dem ersten Flächenpaar behindert. Welches Flächenpaar zwischen welchem liegt, wechselt sich somit in einer Richtung vom Eintritt zum Austritt hin ab.

Der Eintritt weist vorzugsweise eine Düse auf. An diese Düse schließen sich die Flächenpaare vorzugsweise im Wesentlichen lückenlos (insbesondere mit einem maximalen Abstand von weniger als 2 mm oder 1 mm) an. Ferner kann Düse zwischen den (vom Eintritt aus gesehen zuerst kommenden) Flächenpaaren angeordnet sein. Dadurch beginnt die Führung der Schaumbahn mittels der Flächenpaare direkt am Eintritt und insbesondere direkt an der Düse. Die Düse kann eine Breitschlitzdüse sein. Die Düse kann einen Schlitz in Form eines Rechtecks mit einem Seitenverhältnis (Breite zu Höhe) von mehr als 50, 100 oder 300 aufweisen. Die Weite innerhalb der Düse kann ferner einstellbar sein. Die Breite der Düsenöffnung ist entlang der umfänglichen Erstreckungsrichtung des ersten Flächenpaars bemessen. Die Höhe der Düsenöffnung ist entlang der umfänglichen Erstreckungsrichtung des zweiten Flächenpaars bemessen, insbesondere wenn der Aufschäumungsraum einen viereckigen oder insbesondere rechteckigen Querschnitt hat. Die Düse kann eine temperierbare Düse sein, etwa eine gekühlte Düse, etwa eine gekühlte Breitschlitzdüse.

Ferner kann vorgesehen sein, dass zumindest ein Teil der Flächenpaare, temperierbar ausgestaltet sind, etwa zur Kühlung oder zur Erwärmung. Die Flächenpaare werden insbesondere jeweils von zwei gegenüberliegende Führungsflächen bzw. -platten gebildet. Die Führungsflächen bzw. -platten aller oder ein Teil der Flächenpaare können temperierbar ausgestaltet sein.

Ferner wird eine Schaumextrusionsvorrichtung beschrieben. Dies weist eine Schaumformeinrichtung auf, wie sie hierin dargestellt ist. Die Schaumextrusionsvorrichtung weist zudem einen Extruder auf, der der Schaumformeinrichtung vorgeschaltet ist. Insbesondere weist der Extruder der einen Austritt aufweist, an den sich der Eintritt der Schaumformeinrichtung (insbesondere im Wesentlichen lückenlos) anschließt. Vorzugsweise ist die Düse der Schaumformeinrichtung direkt an den Extruder angeschlossen. Weitere Ausführungsformen der Schaumextrusionsvorrichtung sehen vor, dass der Extruder über eine Extrusionsdüse verfügt, die insbesondere wie die hier beschriebenen Düse der Schaumformeinrichtung ausgebildet ist. Die Schaumformeinrichtung ist derart an den Extruder und dessen Extrusionsdüse angeschlossen, dass sich die Flächenpaare (zumindest die Flächenpaare am Eintritt der Schaumformeinrichtung), oder zumindest ein erstes Flächenpaar, direkt (lückenlos) an die Extrusionsdüse anschließen bzw. anschließt. Es besteht insbesondere kein wesentlicher Abstand (> 1 mm, 5 mm oder 10 mm) bzw. kein Zwischenraum zwischen Düse bzw. Extrusionsdüse einerseits und den Führungsplatten der Flächenpaare andererseits.

Die Schaumextrusionsvorrichtung kann als Anlage zur Schaumerzeugung und Schaumkörpernachbearbeitung ausgebildet sein. Diese Anlage bzw. Schaumextrusionsvorrichtung kann ferner eine Schneidevorrichtung aufweisen. Diese ist der Schaumformeinrichtung nachgelagert, d.h. in Förderrichtung abwärts der Schneidevorrichtung vorgesehen. Die Schneidevorrichtung ist eingerichtet, aus einer Endlos-Schaumbahn einzelne Schaumkörper zu schneiden. Zudem kann die Schaumextrusionsvorrichtung ferner eine Verpackungsvorrichtung aufweisen. Die Verarbeitungsstrecke der Anlage, die sich von der Schneidevorrichtung bis zu der Verpackungsvorrichtung erstreckt, ist vorzugsweise frei von oberflächenabtragenden Einrichtungen ausgebildet. Da wie eingangs erwähnt die Einstellung der Flächen eine sehr präzise Steuerung der Dicke und Form der Schaumbahn bzw. Schaumkörper ermöglicht, ergeben sich mit der Erfindung Schaumkörper, die nicht notwendigerweise mittels Oberflächenabtragung behandelt werden müssen. Die Verarbeitungsstrecke zwischen Schneidevorrichtung und Verpackungsvorrichtung weist somit vorzugsweise keine Hobeleinrichtung (bzw. keine Planer-/Grinder-Einheit) auf. Dadurch kann mit weniger Verschnitt und insbesondere mit einer ungeöffneten Oberfläche gearbeitet werden. Der Verzicht auf einen Oberflächenabtrag auf der oberen / unteren Seite der Schaumkörper (abgesehen von dem Zuschneiden von Kanten bzw. von Einbringen von Rillen oder einer Profilierung) führt im Schaumkörper zu deutlich weniger Diffusionstätigkeit, die nachteilig für die Wärmeisolationseigenschaften wäre, da die Oberfläche nach dem Aufschäumen zumindest größtenteils nicht geöffnet wird. Es ergibt sich eine deutlich bessere Konstanz der Isolationswirkung.

Die Verarbeitungsstrecke kann eine Kühleinrichtung und/oder eine Prägewalze aufweisen. Als eine Verarbeitungsstrecke, die frei von oberflächenabtragenden Einrichtungen ist, werden auch Verarbeitungsstrecken bezeichnet, die eine Kantenbearbeitungseinrichtung, Profilierungseinrichtung, und/oder Phasenschneideeinrichtung aufweisen. Da diese nur auf einen kleinen Teil der Oberfläche wirken, sind deren Auswirkungen auf die Gesamtoberfläche vernachlässigbar. Prägung, (ggf. auch Profilierung und Kantenschneiden) sind hierbei nicht als oberflächenabtragende Schritte zu verstehen, da sie sich nur auf eine geringe Breite des Schaumkörpers (kleiner 25%, kleiner 10% oder kleiner 5%) auswirken.

Die Schaumextrusionsvorrichtung kann ferner eine Plasmabehandlungseinrichtung (oder Koronabehandlungsvorrichtung) aufweisen. Diese kann der Schneideeinrichtung oder einer Seitenzuschneideeinrichtung der Schaumextrusionsvorrichtung nachgelagert sein. Damit können die (geringfügigen) Öffnungen der Oberfläche wieder geschlossen werden. Es ergeben sich bei einer geschlossenen Oberfläche weniger Diffusionseffekte, die beispielsweise dazu führen können, dass das Luftbestandteile in die Zellen eindringen, wobei dies zu schlechteren Wärmedämmungseigenschaften führen würde.

Es kann auch Oberflächenbehandlungsvorrichtung in Form einer Laminiervorrichtung oder einer Koronabehandlungsvorrichtung vorgesehen sein, die eingerichtet ist, eine ungeschäumte Kunststoffschicht (vorzugsweise aus dem gleichen Kunststoffmaterial wie die Schaumbahn) aufzutragen. Auch hierdurch kann die Oberfläche versiegelt werden. Die Laminiervorrichtung (auch als Laminierstation bezeichnet) kann nach der Schaumformeinrichtung angeordnet sein, ist jedoch vorzugsweise an einer Lücke der Laminierstation bzw. an einer Öffnung einer Fläche hiervon angeordnet sein, um die noch plastisch verformbare Oberfläche des Schaumkörpers bzw. der geschäumten Schmelze zu bearbeiten, d.h. um dort eine Schicht ungeschäumten Kunststoffs aufzubringen.

Auf die Plasmabehandlungseinrichtung und/oder die Laminiervorrichtung kann eine (weitere) Schaumformeinrichtung folgen, wie sie hier beschrieben ist. Dies ermöglicht eine Behandlung des Schaumkörpers bzw. der Schaumbahn nach der Plasmabehandlung bzw. nach dem Laminieren, um so die Form des Schaumkörpers gemäß Vorgabe präzise auszugestalten.

Die Schaumformeinrichtung kann wie erwähnt mit einer Laminiervorrichtung (ggf. alternativ in Kombination hiermit mit Plasmabehandlungseinrichtung) ausgestattet sein. Die Schaumformeinrichtung kann mit mehreren Gruppen vorgesehen sein, die sich vom Eintritt zum Austritt aneinanderreihen, wobei jedoch ein der Gruppen ausgelassen sein kann oder Flächen einer Gruppe ausgelassen sein können, um so eine Lücke zu bilden. Es kann eine Oberflächenbehandlungsvorrichtung an dieser Lücke oder an einer Öffnung in einer Fläche der Schaumformeinrichtung vorgesehen sein, um die Schaumbahn an dieser Lücke bzw. Öffnung oberflächlich zu bearbeiten. Flächen bzw. Flächenabschnitte, die (in Richtung des Austritts) nach der Lücke (durch Auslassen einer Fläche oder durch eine Öffnung in der Fläche) vorgesehen sind, wirken dann im Wesentlichen nur auf die auflaminierte (bzw. allgemein: behandelte) Schicht, so dass dadurch Oberflächeneigenschaften (insbesondere der auflaminierten Schicht, beispielsweise deren Dicke) präzise eingestellt werden können. Allgemein kann als Oberflächenbehandlungsvorrichtung beispielsweise eine Laminiervorrichtung oder Färbevorrichtung (oder eine Plasmabehandlungseinrichtung) vorgesehen sein. Auf die Gruppe, die ausgelassen ist, um die Lücke zu bilden, folgt vorzugsweise (zum Austritt hin) mindestens eine weitere Gruppe, die insbesondere vollständig ist, um so die oberflächenbehandelte Schaumbahn mit den beschriebenen Flächen bzw. Flächenpaaren nochmals in Form zu bringen. Auf die Öffnung in einer Fläche folgt zumindest noch ein Abschnitt der verbleibenden, geschlossenen Fläche, wobei auch mindestens eine weitere Fläche folgen kann.

Die Flächen bzw. Führungsplatten der Flächenpaare können einteilig oder mehrteilig sein. Im letztgenannten Fall bestehen mehrere Flächenelemente, die sich vorzugsweise überlappen. Die mehreren Flächenelemente sind in einer Richtung senkrecht zur Förderrichtung aneinandergereiht. Die mehreren Flächenelemente sind in einer Richtung aneinandergereiht, die von einer Fläche des angrenzenden Flächenpaars zur gegenüberliegenden Fläche des angrenzenden Flächenpaars führt (entsprechend einer Überlappungsrichtung). Flächen erster Flächenpaare weisen dabei mehrere Flächenelemente auf, die sich in Richtung zu den Flächen der zweiten Flächenpaare überlappen (Überlappungsrichtung, d.h. senkrecht zur Förderrichtung). Flächen zweiter Flächenpaare weisen dabei mehrere Flächenelemente auf, die sich in Richtung zu den Flächen der ersten Flächenpaare überlappen. Es können eine oder mehrere Gruppen vorgesehen sein, die (insbesondere zweite) Flächenpaare aufweisen, deren Flächen mehrteilig ausgebildet sind von Flächenelementen. Anstatt einer Überlappung der Flächenelemente der selben Fläche kann auch eine anstoßende Anordnung der Flächenelemente vorgesehen sein, insbesondere lückenfrei.

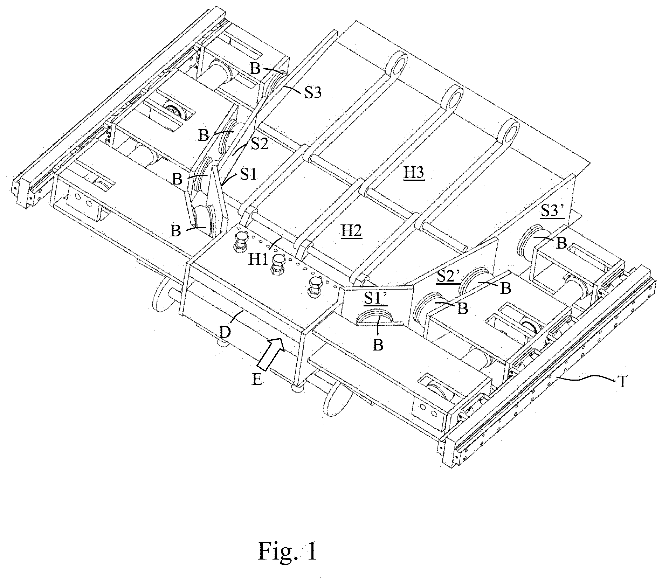

Die Figuren 1 - 4 dienen zur näheren Erläuterung von hier beschriebenen Schaumformeinrichtung.

Die Figur 1 zeigt in perspektivischer Ansicht eine Vorrichtung mit einem Eintritt E, der auf eine Düse D folgt. Die Düse D ist eine Breitschlitzdüse.

Zur Formung des Schaums, der aus der Düse D tritt, werden erste, seitlich angeordnete Flächenpaare verwendet. Das (erste) Flächenpaar S1, S1' schließt sich unmittelbar an die Düse an, wobei der zur Düse D hin gewandte Rand dieses Flächenpaars Teil des Eintritts ist. An dieses erste Flächenpaar S1, S1' schließen sich die weiteren ersten Flächenpaare S2, S2' sowie S3, S3' in dieser Reihenfolge an. Es ist zu erkennen, dass die Flächen dieser Flächenpaare sich überlappen. An einem Übergang eines ersten Flächenpaars zum nächsten ersten Flächenpaar (in einer Richtung, die vom Eintritt E weg weist liegt die Kante desjenigen Flächenpaars über dem nächsten Flächenpaar, welches sich näher am Eintritt E befindet. Vom umschlossenen Aufschäumungsraum aus gesehen sind gehen die ersten Flächenpaare ineinander über und bilden eine (quasi-)durchgängige Innenfläche. Die mit dem Bezugszeichen S... bezeichneten Flächen der Flächenpaare sind seitlich angeordnet und begrenzen den Aufschäumungsraum seitlich. Die betreffenden Flächenpaare verlaufen seitlich (sowie im Wesentlichen entlang der Förderrichtung) und weisen quer zur Förderrichtung beabstandete Flächen auf, zwischen denen sich der Aufschäumungsraum R befindet

Ferner bestehen zweite Flächenpaare H1 - H3, die sich im Wesentlichen entlang der Förderrichtung und quer zu den ersten Flächenpaaren erstrecken. Im Querschnitt wechseln sich in Umfangsrichtung Flächen der ersten Flächenpaare und Flächen der zweiten Flächenpaare einander ab. Zu sehen sind die oberen Flächen der zweiten Flächenpaare. Das zweite Flächenpaar H1 schließt sich direkt an die Düse D an (bzw. bildet einen Teil des Eintritts E), woraufhin sich die weiteren zweiten Flächenpaare H2, H3 in dieser Reihenfolge anschließen. Auch die zweiten Flächenpaare bilden eine durchgehende Innenfläche (vom Aufschäumungsraum aus gesehen).

Die Flächenpaare H1 und S1, S1' bilden eine erste Gruppe und umschließen den Aufschäumungsraum. Dies gilt auch für die Flächenpaare H2 und S2, S2', die eine zweite Gruppe bilden, sowie für die Flächenpaare H3 und S3, S3', die eine dritte Gruppe bilden. Jede Gruppe umschließt den Aufschäumungsraum in umfänglicher Richtung vollständig. Die erste Gruppe befindet sich direkt am Eintritt, wobei die zweite und die dritte Gruppe sich in dieser Reihenfolge daran (überlappend) anschließen. Es ergibt sich eine umfängliche und in Förderrichtung (eine vom Eintritt weg weisende Richtung) durchgehende Innenfläche gebildet von den Flächenpaaren.

Es ist zu erkennen, dass für die in der Figur 1 dargestellten Flächenpaare gilt, dass die querverlaufenden (horizontalen) Flächenpaare H1 - H3 von den seitlichen Flächenpaare S1, S1' - S3, S3' eingeschlossen sind. Es können weitere Gruppen folgen, bei dem dies umgekehrt ist. Die ersten und zweiten Flächenpaare der selben Gruppe sind in einer vom Eintritt E weg weisenden Richtung in der selben Höhe angeordnet. Insbesondere können die Mittelpunkte der ersten und zweiten Flächenpaare der selben Gruppe im Wesentlichen in der selben Querschnittsebene (d.h. in der selben Entfernung von Eintritt E aus) vorgesehen sein. Ein Übergang zwischen ersten, aufeinander folgenden Flächenpaaren sind in der Entfernung vom Eintritt vorgesehen, an der auch der Übergang zwischen zweiten, aufeinander folgenden Flächenpaaren vorgesehen ist. Die Übergänge zwischen den aufeinander folgenden Gruppen sind für die betreffenden ersten und zweiten Flächenpaare an der selben Stelle, d.h. im selben Abstand vom Eintritt.

Es ist in Figur 1 dargestellt, dass die seitlichen Flächenpaare in einem Rahmen T vorgesehen sind und von Balgelementen B gegenüber dem Rahmen T gelagert werden. Die Balgelemente können mit einem einstellbaren Innendruck beaufschlagt werden, so dass sich die Position und/oder der Anpressdruck der betreffenden Flächenpaare gegenüber dem Schaum im Innenraum einstellen lässt. Dadurch kann der Aufschäumprozess eingestellt werden. Auch die Flächenpaare H1 - H3 lassen sich in ihrer Position einstellen.

Die ersten Flächenpaare S1, S1' - S3, S3' gehen vom Eintritt E aus gesehen zunächst mit einem größeren Winkel auseinander als im weiteren Verlauf in einer von Eintritt E weg weisenden Richtung. Während die Flächen des Flächenpaars S3, S3' (weiter vom Eintritt E als S1, S1' entfernt) nur einen vergleichsweise geringen Öffnungswinkel haben und nahezu parallel zueinander sind, haben die Flächen des Flächenpaars S1, S1' (am Eintritt E) einen im Vergleich zu S3, S3' deutlich größeren Öffnungswinkel. Mit der Entfernung vom Eintritt verringert sich der (zum Austritt offene) Öffnungswinkel zwischen den Flächen der Flächenpaare.

Die Figur 1 zeigt eine Schaumformeinrichtung, bei der auf die Fläche H3 / auf die Flächenpaare S3, S3' der Austritt folgt. Eine Ausführungsform der Schaumformeinrichtung sieht jedoch einen ersten Abschnitt auf, der wie die in Figur 1 dargestellte Anordnung ausgebildet ist, auf die ein zweiter Abschnitt folgt. Dies ist anhand der weiteren Figuren näher erläutert.

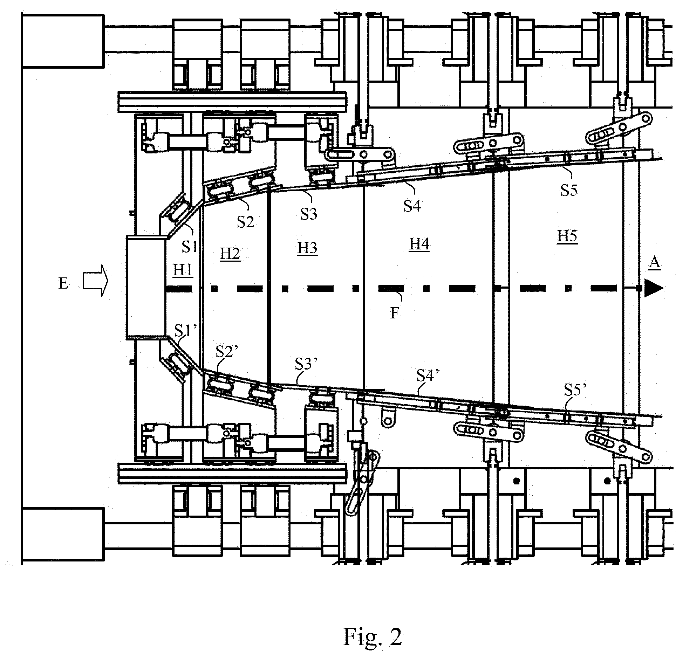

Die Figur 2 zeigt eine Draufsicht einer Schaumformeinrichtung mit ersten Flächenpaaren S1, S1' - S3, S3' wie in Figur 1 dargestellt, sowie mit weiteren, darauf folgenden ersten Flächenpaaren S4, S5. Die zweiten Flächenpaare H1 - H3 (d.h. die drei Flächenpaare, die dem Eintritt E / der Düse am nächsten sind) sind seitlich umgeben von den ersten Flächenpaaren S1, S1' - S3, S3'. Dies ändert sich mit den darauf (weg vom Eintritt) folgenden ersten und zweiten Flächenpaaren H4, H4 und S4, S4'; S5, S5', bei denen die ersten (seitlichen bzw. vertikal ausgerichteten) Flächenpaare S4, S4' und S5, S5' zwischen den zweiten Flächenpaaren H4, H5 (d.h. die quer verlaufenden bzw. horizontal ausgerichteten Flächenpaare) vorgesehen sind. Dies erlaubt ohne Wesentlichen nicht verwendeten Bauraum eine gezielte Steuerung der Aufschäumung im ersten Bereich am Eintritt A und in einem darauffolgenden, zweiten Bereich am Austritt A. Der strichpunktierte Pfeil F zeigt die Förderrichtung, die vom Eintritt ausgeht und in Richtung des Austritts führt. Entlang dieser Förderrichtung sind die genannten Abschnitte und Gruppen aneinander gereiht; die aufeinander folgenden Gruppen weisen Flächen auf, die sich überlappen.

Die erste Gruppe wird gebildet von dem ersten Flächenpaar S1, S1' und dem zweiten Flächenpaar H1. Die zweite Gruppe wird gebildet von dem ersten Flächenpaar S2, S2' und dem zweiten Flächenpaar H2. Die dritte Gruppe wird gebildet von dem ersten Flächenpaar S3, S3' und dem zweiten Flächenpaar H3. Diese Gruppen sind in Richtung des Pfeils F (Förderrichtung) aneinandergereiht und weisen alle die Eigenschaft auf, dass die ersten Flächenpaare H1 - H3 zwischen den zweiten Flächenpaaren (S1, S1' und S2, S2' sowie S3, S3') angeordnet sind. Diese drei Gruppen können als erster Abschnitt bezeichnet werden. Es ist ersichtlich, dass die Gruppen des ersten Abschnitts auch in einer von drei verschiedenen Anzahl vorgesehen sein können, etwa in Form von nur einer Gruppe oder von zwei Gruppen oder von mehr als drei Gruppen. Dies hängt von dem Anwendungsfall ab, insbesondere von der Zielgröße des Schaumprodukts und von dessen Aufschäumverhalten.

Es folgt ein zweiter Abschnitt, bei dem die im vorangehenden Absatz genannte Eigenschaft umgekehrt ist. Der zweite Abschnitt weist eine vierte und eine fünfte Gruppe auf. Die vierte Gruppe wird gebildet von dem ersten Flächenpaar S4, S4' und dem zweiten Flächenpaar H4. Die fünfte Gruppe wird gebildet von dem ersten Flächenpaar S5, S5' und dem zweiten Flächenpaar H5. Diese Gruppen sind in Richtung des Pfeils F (Förderrichtung) aneinandergereiht und folgen auf die Gruppen des ersten Abschnitts. Die vierte und fünfte Gruppe weisen jeweils die Eigenschaft auf, dass die zweiten Flächenpaaren (S4, S5' und S2, S2' sowie S3, S3') zwischen den ersten Flächenpaaren H4, H5 angeordnet sind. Diese zwei Gruppen können als zweiter Abschnitt bezeichnet werden. Es ist ersichtlich, dass die Gruppen des zweiten Abschnitts auch in einer von zwei verschiedenen Anzahl vorgesehen sein können, etwa in Form von nur einer Gruppe oder von drei oder von mehr als drei Gruppen. Dies hängt von dem Anwendungsfall ab, insbesondere von der Zielgröße des Schaumprodukts und von dessen Aufschäumverhalte.

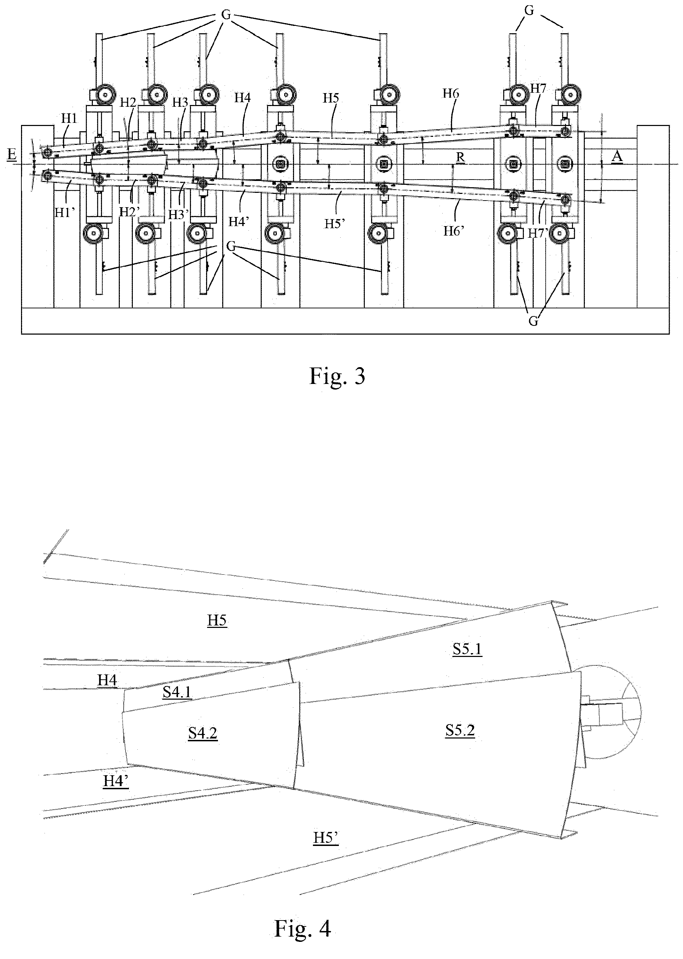

Die Figur 3 zeigt die Vorrichtung der Figur 2 im Längsschnitt. Es sind die ersten Flächenpaare H1, H1' / H2, H2' / H3, H3' / H4, H4' / H5, H5'/ H6, H6' und H7, H7' zu sehen, die in Förderrichtung aneinander gereiht sind. Zudem sind Aktuatoren G zu erkennen, mittels denen die Position und/oder der von en Flächenpaaren ausgeübte Druck in Richtung Aufschäumungsraum R eingestellt werden kann. Die Aktuatoren G können sich von den Balgelementen B unterscheiden, die zur Einstellung der zweiten Flächenpaare verwendet werden. Insbesondere können die Aktuatoren G Spindelantriebe sein.

Die Abstände der ersten Flächenpaare (d.h. zwischen den Flächen der Flächenpaare) der Figur 3 in ausgehend vom Eintritt E in Richtung A zu. Dies entspricht der Dickenzunahme des Schaumkörpers im Verlauf des Schäumungsprozesses. In mindestens einem Längsabschnitt der dargestellten Vorrichtung können die ersten (horizontalen) Flächenpaare zwischen den zweiten (seitlichen) Flächenpaaren angeordnet sein. In mindestens einem weitere Längsabschnitt der dargestellten Vorrichtung können die zweiten (seitlichen) Flächenpaare zwischen den ersten (horizontalen) Flächenpaaren angeordnet sein.

Die Figur 4 zeigt ein Detail einer Schaumformeinrichtung wie sie hierin beschrieben ist und entspricht einer Innenansicht, die vom Aufschäumungsraum aus auf die Innenseiten der Flächenpaare zu sehen ist. Es ist zu erkennen, dass die Flächen der zweiten Flächenpaare (zu sehen ist nur eine der beiden seitlichen Flächen) zweiteilig (allgemein: mehrteilig) sind und zueinander verschiebbaren und sich überlappende Flächenelementen S4.1, S4.2 sowie S5.1 und S5.2 aufweisen. So wird eine Fläche eines zweiten Flächenpaars gebildet von den Flächenelementen S4.1 und S4.2 bzw. von deren vertikalen, überlappenden Aneinanderreihung. Die in Förderrichtung darauf folgende Fläche eines weiteren zweiten Flächenpaars wird gebildet von den Flächenelementen S5.1 und S5.2 bzw. von deren vertikalen, überlappenden Aneinanderreihung. Die Aneinanderreihung der Fläche gebildet von den Flächenelementen S4.1 und S4.2 befindet sich zwischen dem ersten Flächenpaar H4, H4'. Diese sind Teil der selben Gruppe. Die Aneinanderreihung der Fläche gebildet von den Flächenelementen S5.1 und S5.2 befindet sich zwischen dem zweiten Flächenpaar H5, H5'. Diese sind Teil einer weiteren, (in Förderrichtung) folgenden Gruppe. Die Flächenelemente derselben Fläche sind vorzugsweise zueinander verschiebbar gelagert, insbesondere in einer Richtung senkrecht zur Förderrichtung, jedoch vorzugsweise nicht verschiebbar in Förderrichtung.

Die in den Figuren dargestellten ersten Flächenpaare verlaufen horizontal und können auch als Horizontal-Flächenpaare bzw. quer verlaufende Flächenpaare bezeichnet werden. Die in den Figuren dargestellten zweiten Flächenpaare verlaufen vertikal und können auch als Vertikal-Flächenpaare bzw. seitlich verlaufende Flächenpaare bezeichnet werden. Jedoch hängt dies von der Orientierung bei der Montage und von Anwendungsfällen ab, so dass diese Bezeichnung vorzugsweise nur zur Erläuterung der Ausführungsformen der Figuren verwendet wird.

## Patentansprüche

1. Schaumformeinrichtung mit einem Eintritt (E), einem Austritt (A) und einer Längsachse, die vom Eintritt (E) zum Austritt (A) führt, sowie mit einer Vielzahl von Flächenpaaren, wobei die Flächenpaare jeweils zwei gegenüberliegende Flächen aufweisen und die Flächen einen Aufschäumungsraum (R) zumindest teilweise begrenzen, wobei die Vielzahl von Flächenpaaren ein erstes Flächenpaar (H1, H1') und ein zweites Flächenpaar (S1, S1') aufweisen, wobei zumindest eine der Flächen des ersten Flächenpaars (H1, H1') eine einstellbare Fläche ist, deren Positionierung relativ zu der Längsachse einstellbar ist, und zumindest eine der Flächen des zweiten Flächenpaars (S1, S1') eine einstellbare Fläche ist, deren Positionierung relativ zu der Längsachse einstellbar ist, **dadurch gekennzeichnet, dass** das erste Flächenpaar (H1, H1') und das zweite Flächenpaar (S1, S1') entlang des sich auf die Längsachse beziehenden Umfangs des Aufschäumungsraums (R) zueinander versetzt sind.

2. Schaumformeinrichtung nach Anspruch 1, wobei die Flächenpaare (H1, H1'; S1, S1') den Aufschäumungsraum (R) im Wesentlichen vollständig umfänglich begrenzen.

3. Schaumformeinrichtung nach Anspruch 1 oder 2, wobei das erste Flächenpaar (H1, H1') und das zweite Flächenpaar (S1, S1') zusammen den Aufschäumungsraum (R) umfänglich begrenzen und die Flächenpaare ein Viereck, ein Trapez, ein Parallelogramm oder ein Rechteck bilden und/oder wobei sich das erste Flächenpaar (H1, H1') zwischen dem zweiten Flächenpaar (S1, S1') befindet und zu diesem gewinkelt angeordnet ist.

4. Schaumformeinrichtung nach Anspruch 1, 2 oder 3, wobei die Position der einstellbaren Flächen relativ zu der Längsachse und/oder ein Druck, der von den einstellbaren Flächen in Richtung des Aufschäumungsraums (R) ausgeübt wird, einstellbar ist.

5. Schaumformeinrichtung nach einem der vorangehenden Ansprüche, wobei die Flächen der Flächenpaare eben sind oder in einer Richtung, die von der Längsachse weg führt, gebogen sind.

6. Schaumformeinrichtung nach einem der vorangehenden Ansprüche, wobei sich mehrere Flächenpaare (S1, S1'; S2, S2', S3, S3') der Vielzahl von Flächenpaaren in einer Richtung vom Eintritt (E) zum Austritt (A) hin aneinanderreihen, wobei sich insbesondere die Flächen der Flächenpaare, welche sich in der Richtung vom Eintritt (E) zum Austritt (A) hin aneinanderreihen, im Wesentlichen lückenlos oder teilweise überlappend aneinandergereiht sind.

7. Schaumformeinrichtung nach einem der vorangehenden Ansprüche, wobei sich der Abstand zwischen gegenüberliegenden Flächen (S1, S1') einer Untergruppe oder aller Flächenpaare sich zum Austritt (A) der Schaumformeinrichtung hin vergrößert.

8. Schaumformeinrichtung nach einem der vorangehenden Ansprüche, die ferner Aktoren (B) aufweist, die die einstellbaren Flächenpaare lagern und die eingerichtet sind, die Neigung und/oder die Position der einstellbaren Flächenpaare einzustellen, wobei insbesondere die Aktoren (B) die Flächenpaare elastisch gegenüber einem Gegenlager lagern und wobei vorzugsweise die Aktoren (B) pneumatische Aktoren, insbesondere Balgaktuatoren, elektromechanische Aktoren oder hydraulische Aktoren sind.

9. Schaumformeinrichtung nach Anspruch 7 oder 8, die ferner eine Steuerung aufweist, die ansteuernd mit den Aktoren (B) verbunden ist, und ferner mehrere Flächenpaare der Vielzahl von Flächenpaaren in einer Richtung vom Eintritt zum Austritt hin aneinandergereiht sind, wobei die Steuerung eingerichtet ist, Flächen der Flächenpaare lückenlos aneinandergereiht einzustellen.

10. Schaumformeinrichtung nach einem der vorangehenden Ansprüche, wobei erste sowie zweite Flächenpaare in einer Richtung vom Eintritt (E) zum Austritt (A) hin in mehreren Gruppen aneinandergereiht sind, und die ersten Flächenpaare (H1, H1') entlang des Umfangs des Aufschäumraums (R) zueinander versetzt sind zu den zweiten Flächenpaaren (S1, S1') und mindestens eine erste Gruppe vorgesehen ist, bei der sich das erste Flächenpaar (H1, H1') zwischen dem zweiten Flächenpaar (S1, S1') befindet, sowie eine mindestens eine zweite Gruppe vorgesehen ist, die in der Richtung zum Austritt (A) auf die erste Gruppe folgt, und bei der sich das zweite Flächenpaar (S4.1, S4.2) zwischen dem ersten Flächenpaar (H4, H4') befindet.

11. Schaumformeinrichtung nach Anspruch 10, wobei zwischen zwei aufeinanderfolgenden Gruppen eine Lücke vorgesehen ist, an der eine Oberflächenbehandlungsvorrichtung, etwa eine Laminierstation, angeordnet ist.

12. Schaumformeinrichtung nach einem der vorangehenden Ansprüche, wobei in einer der Flächen eine Öffnung vorgesehen ist, wobei an der Öffnung eine Oberflächenbehandlungsvorrichtung, etwa eine Laminierstation, angeordnet ist.

13. Schaumformeinrichtung nach einem der vorangehenden Ansprüche, wobei der Eintritt (E) eine Düse (D) aufweist, an die sich die Flächenpaare im Wesentlichen lückenlos anschließen oder die Düse (D) zwischen den Flächenpaaren angeordnet ist.

14. Schaumformeinrichtung nach einem der vorangehenden Ansprüche, wobei zumindest ein Teil der Flächenpaare temperierbar ausgestaltet sind.

15. Schaumextrusionsvorrichtung mit einer Schaumformeinrichtung nach einem der vorangehenden Ansprüche und mit einem Extruder, der einen Austritt aufweist, wobei sich der Eintritt (E) der Schaumformeinrichtung im Wesentlichen lückenlos an den Austritt des Extruders anschließt.

## Claims

1. A foam forming device having an inlet (E), an outlet (A) and a longitudinal axis which leads from the inlet (E) to the outlet (A), and having a multitude of face pairs, wherein the face pairs each have two opposing faces and the faces at least partially delimit a foaming space (R), wherein the multitude of face pairs have a first face pair (H1, H1') and a second face pair (S1, S1'), wherein at least one of the faces of the first face pair (H1, H1') is an adjustable face, the positioning of which relative to the longitudinal axis is adjustable, and at least one of the faces of the second face pair (S1, S1') is an adjustable face, the positioning of which relative to the longitudinal axis is adjustable, **characterized in that** the first face pair (H1, H1') and the second face pair (S1, S1') are offset relative to each other along the circumference of the foaming space (R), the circumference relating to the longitudinal axis.

2. The foam forming device as claimed in claim 1, wherein the face pairs (H1, H1'; S1, S1') delimit the foaming space (R) substantially completely circumferentially.

3. The foam forming device as claimed in claim 1 or 2, wherein the first face pair (H1, H1') and the second face pair (S1, S1') together delimit the foaming space (R) circumferentially and the face pairs form a quadrangle, a trapezium, a parallelogram or a rectangle and/or wherein the first face pair (H1, H1') is located between the second face pair (S1, S1') and is arranged at an angle relative thereto.

4. The foam forming device as claimed in claim 1, 2 or 3, wherein the position of the adjustable faces relative to the longitudinal axis and/or a pressure which is applied by the adjustable faces in the direction of the foaming space (R), is adjustable.

5. The foam forming device as claimed in one of the preceding claims, wherein the faces of the face pairs are planar or are bent in a direction which leads away from the longitudinal axis.

6. The foam forming device as claimed in one of the preceding claims, wherein a plurality of face pairs (S1, S1'; S2, S2', S3, S3') of the multiude of face pairs are arranged beside each other in rows in a direction from the inlet (E) to the outlet (A), wherein, in particular, the faces of the face pairs which are arranged in rows beside each other in the direction from the inlet (E) to the outlet (A) are arranged beside each other in rows in a substantially gap-free or partially overlapping manner.

7. The foam forming device as claimed in one of the preceding claims, wherein the spacing between opposite faces (S1, S1') of a sub-group or all of the face pairs increases in the direction toward the outlet (A) of the foam forming device.

8. The foam forming device as claimed in one of the preceding claims, which further has actuators (B) which support the adjustable face pairs and which are configured to adjust the inclination and/or the position of the adjustable face pairs, wherein, in particular, the actuators (B) support the face pairs elastically with respect to a counter-bearing, and wherein preferably the actuators (B) are pneumatic actuators, in particular bellows actuators, electromechanical actuators or hydraulic actuators.

9. The foam forming device as claimed in claim 7 or 8, which further has a control unit which is connected to the actuators (B) in a controlling manner, and furthermore a plurality of face pairs of the multitude of face pairs are arranged in rows beside each other in a direction from the inlet to the outlet, wherein the control unit is configured to adjust faces of the face pairs in a state arranged in rows beside each other in a gap-free way.

10. The foam forming device as claimed in one of the preceding claims, wherein first and second face pairs are arranged in rows beside each other in a direction from the inlet (E) to the outlet (A) in several groups, and the first face pairs (H1, H1') are offset relative to each other along the circumference of the foaming space (R) with respect to the second face pairs (S1, S1') and there is provided at least a first group in which the first face pair (H1, H1') is located between the second face pair (S1, S1') and there is provided at least one second group which follows the first group in the direction toward the outlet (A), and in which the second face pair (S4.1, S4.2) is located between the first face pair (H4, H4').

11. The foam forming device as claimed in claim 10, wherein there is provided between two successive groups a gap, at which a surface processing apparatus, for instance, a laminating station, is arranged.

12. The foam forming device as claimed in one of the preceding claims, wherein an opening is provided in one of the faces, wherein at the opening a surface processing apparatus, for instance, a laminating station, is arranged.

13. The foam forming device as claimed in one of the preceding claims, wherein the inlet (E) has a nozzle (D), at which the face pairs abut in a substantially gap-free manner or the nozzle (D) is arranged between the face pairs.

14. The foam forming device as claimed in one of the preceding claims, wherein at least some of the face pairs are configured in a temperature-controllable manner.

15. A foam extrusion apparatus having a foam forming device as claimed in one of the preceding claims and having an extruder which has an outlet, wherein the inlet (E) of the foam forming device adjoins the outlet of the extruder in a substantially gap-free manner.

## Revendications

1. Dispositif de moulage de mousse comprenant une entrée (E), une sortie (A) et un axe longitudinal qui mène de l'entrée (E) à la sortie (A), ainsi qu'une pluralité de paires de surfaces, les paires de surfaces présentant chacune deux surfaces opposées et les surfaces délimitant au moins partiellement un espace de moussage (R), la pluralité de paires de surfaces comprenant une première paire de surfaces (H1, H1') et une deuxième paire de surfaces (S1, S1'), au moins l'une des surfaces de la première paire de surfaces (H1, H1') étant une surface réglable dont la position par rapport à l'axe longitudinal est réglable, et au moins l'une des surfaces de la deuxième paire de surfaces (S1, S1') étant une surface réglable dont le positionnement par rapport à l'axe longitudinal est réglable, **caractérisé en ce que** la première paire de surfaces (H1, H1') et la deuxième paire de surfaces (S1, S1') sont décalées l'une par rapport à l'autre le long du périmètre de l'espace de moussage (R) par rapport à l'axe longitudinal.

2. Dispositif de moulage de mousse selon la revendication 1, dans lequel les paires de surfaces (H1, H1' ; S1, S1') délimitent sensiblement complètement la périphérie de l'espace de moussage (R).

3. Dispositif de moulage de mousse selon la revendication 1 ou la revendication 2, dans lequel la première paire de surfaces (H1, H1') et la deuxième paire de surfaces (S1, S1') délimitent ensemble la périphérie de l'espace de moussage (R) et les paires de surfaces forment un quadrilatère, un trapèze, un parallélogramme ou un rectangle et/ou la première paire de surfaces (H1, H1') se trouve entre la deuxième paire de surfaces (S1, S1') et est agencée en angle par rapport à celle-ci.

4. Dispositif de moulage de mousse selon l'une des revendications 1, 2 ou 3, dans lequel la position des surfaces réglables par rapport à l'axe longitudinal et/ou une pression exercée par les surfaces réglables en direction de l'espace de moussage (R) est réglable.

5. Dispositif de moulage de mousse selon l'une des revendications précédentes, dans lequel les surfaces des paires de surfaces sont planes ou courbées dans une direction allant en s'éloignant de l'axe longitudinal.

6. Dispositif de moulage de mousse selon l'une des revendications précédentes, dans lequel plusieurs paires de surfaces (S1, S1' ; S2, S2' ; S3, S3') de la pluralité de paires de surfaces sont alignées dans une direction allant de l'entrée (E) à la sortie (A), en particulier les surfaces des paires de surfaces qui sont alignées dans la direction allant de l'entrée (E) à la sortie (A) sont alignées essentiellement sans discontinuité ou en se chevauchent partiellement.

7. Dispositif de moulage de mousse selon l'une des revendications précédentes, dans lequel la distance entre les surfaces opposées (S1, S1') d'un sous-groupe ou de toutes les paires de surfaces augmente vers la sortie (A) du dispositif de moulage de mousse.

8. Dispositif de moulage de mousse selon l'une des revendications précédentes, qui comprend en outre des actionneurs (B) qui supportent les paires de surfaces réglables et qui sont conçus pour régler l'inclinaison et/ou la position des paires de surfaces réglables, les actionneurs (B) supportant en particulier les paires de surfaces de manière élastique par rapport à un palier de butée, et les actionneurs (B) étant de préférence des actionneurs pneumatiques, en particulier des actionneurs à soufflet, des actionneurs électromécaniques ou des actionneurs hydrauliques.

9. Dispositif de moulage de mousse selon la revendication 7 ou la revendication 8, qui comprend en outre un dispositif de commande relié aux actionneurs (B) pour les commander, et en outre plusieurs paires de surfaces de la pluralité de paires de surfaces sont alignées les unes à côté des autres dans une direction allant de l'entrée à la sortie, le dispositif de commande étant conçu de façon à régler les surfaces des paires de surfaces de manière à ce qu'elles soient alignées les unes à côté des autres sans discontinuité.

10. Dispositif de moulage de mousse selon l'une des revendications précédentes, dans lequel des premières et des deuxièmes paires de surfaces sont alignées en plusieurs groupes dans une direction allant de l'entrée (E) à la sortie (A), et les premières paires de surfaces (H1, H1') sont décalées les unes par rapport aux autres le long du périmètre de l'espace de moussage (R) par rapport aux deuxièmes paires de surfaces (S1, S1') et au moins un premier groupe est prévu, dans lequel la première paire de surfaces (H1, H1') se trouve entre la deuxième paire de surfaces (S1, S1'), ainsi qu'au moins un deuxième groupe est prévu, qui suit le premier groupe dans la direction allant vers la sortie (A) et dans lequel la deuxième paire de surfaces (S4.1, S4.2) se trouve entre la première paire de surfaces (H4, H4').

11. Dispositif de moulage de mousse selon la revendication 10, dans lequel un espace est prévu entre deux groupes successifs, au niveau duquel est agencé un dispositif de traitement de surface, par exemple une station de laminage.

12. Dispositif de moulage de mousse selon l'une des revendications précédentes, dans lequel une ouverture est prévue dans l'une des surfaces, un dispositif de traitement de surface, tel qu'une station de laminage, étant agencé au niveau de l'ouverture.

13. Dispositif de moulage de mousse selon l'une des revendications précédentes, dans lequel l'entrée (E) présente une buse (D) à laquelle se raccordent les paires de surfaces essentiellement sans discontinuité ou la buse (D) est agencée entre les paires de surfaces.

14. Dispositif de moulage de mousse selon l'une des revendications précédentes, dans lequel au moins une partie des paires de surfaces est conçue pour être à température contrôlée.

15. Dispositif d'extrusion de mousse comprenant un dispositif de moulage de mousse selon l'une des revendications précédentes et comprenant une extrudeuse qui présente une sortie, l'entrée (E) du dispositif de moulage de mousse se raccordant essentiellement sans discontinuité à la sortie de l'extrudeuse.
